# EUROPEAN PATENT APPLICATION

(11) **EP 0 539 029 A2**
(43) Date of publication of application: **28.04.1993**
(21) Application number: 92308724.1
(22) Date of filing: 24.09.1992
(51) Int. Cl.: H02P 5/34

(54) **Temperature compensated circuit for induction motor**

(30) Priority: 24.09.1991 JP 242280/91
(71) Applicant: OTIS ELEVATOR COMPANY, Farmington, CT 06032 (US)
(72) Inventor: Doi,Kazuhiko, Chofu-shi, Tokyo (JP); Mori,Masayuki, Tsushima-shi, Aichi-ken 496 (JP)
(74) Representative: Tomlinson, Kerry John

(57) **Abstract**

The purpose of this invention is to provide secondary resistance low temperature compensation in vector speed control at values that are close to the actual secondary time constant even at startup of the motor when the secondary time constant calculation operation is not carried out.

The invention consists of vector speed control devices 1 to 5 of the induction motor IM, with secondary resistance low temperature compensation of the electric motor being carried out by installing a secondary time constant operator (6) which detects the secondary time constant of the electric motor; a comparator/register (7) which holds and outputs low temperature data τ_{2L} by comparing and holding the lower temperature one of register data and the output τ₂ of the aforementioned operator (6); and a damping unit (8) which, during operation, carries out replacement of sequential data with the output τ₂ of the operator (6), and, during shutdown, outputs values τ₂* to a slip angular frequency operator (5) of the vector control circuit, which values slowly change from the value τ₂ at the stop of operation to the value τ_{2L}. In another embodiment the value τ₂* can switch from the τ₂ value at the stop of operation to the value τ_{2L} a predetermined time after the stop.

The value τ_{2L} may instead be determined as the first calculated τ₂ value on initial operation after a stop for a predetermined time.

## Description

This invention concerns a temperature compensation circuit for induction motors which performs temperature compensation for the secondary resistance of the motor when vector control is performed in the velocity control device of a motor.

There are the following conventional temperature compensation methods for the secondary resistance of an induction motor: (1) a method in which the variation in the secondary resistance is derived from the variation of the actual output voltage from the target voltage, and this variation is input into the slip angular frequency operator for compensation (such as Japanese Patent Application No. Hei 1[1989]-267706); (2) a method in which the variation in the secondary resistance is derived from the secondary magnetic flux and the primary current, and this variation is input into the slip angular frequency operator for compensation (such as Japanese Patent Application No. Hei 1[1989]-82787); and (3) a method in which the secondary time constant of the motor is calculated from the transient characteristics of the output current (output voltage) as a DC voltage (DC current) is applied, and the result is input to the slip angular frequency operator for compensation.

However, for said method (1) which detects the output voltage to make the temperature compensation, since compensation is performed when there is a certain change in the output voltage, the compensation has to be performed when the output voltage is high enough (that is, the output frequency is high enough), and so the compensation cannot be performed in the starting state.

For said method (2) which performs temperature compensation by the secondary magnetic flux and the primary current, since detection of the secondary magnetic flux is difficult, and the secondary magnetic flux is calculated, in this case, as the secondary magnetic flux is calculated from the output voltage, the compensation is performed by a certain variation in the output voltage, while the compensation cannot be performed in the start state.

For an elevator motor, however, the control should be performed over the entire region from start to stop, and the compensation has to be performed in the start stage; hence, said methods (1) and (2) cannot be used for the temperature compensation of elevators.

On the other hand, for said method (3) which measures the transient characteristics of the output voltage or output current as a DC voltage is applied and calculates the secondary time constant, the measurement time is long for a motor with a long time constant. For an elevator, the time from the stopping of the doors to the start of motion of the cage becomes longer, and the passengers feel uncomfortable.

The purpose of this invention is to solve the problems of the conventional methods by temperature compensation of the secondary resistance with a value near the actual secondary time constant, even in the start state, without calculating the secondary time constant.

This invention provides a temperature compensation circuit for the secondary resistance of an induction motor velocity control device by belt control including a secondary time constant operator which detects the secondary time constant of the motor; a comparator/register unit which compares the output of the secondary time constant operator with the registered data,. and which holds the lower temperature data and outputs it at the same time; and a damping unit which performs successive replacement of data in the operation process upon output of the secondary time constant operator and which sends to a slip angular frequency operator of the vector control circuit a datum with a damping characteristic to the output value of the data register unit when the motor is stopped.

For the comparator/register unit, even when the output of the secondary time constant operator is a higher temperature datum than the registered datum, if it is the initial detected datum in the initial operation after the stop state continues for a prescribed time, it is still used to replace the registered datum.

The comparator/register unit may also be made of a data register unit which holds the initial output of the secondary time constant operator in the initial operation after the stop state has continued for a prescribed time.

The damping unit may be replaced by a switch unit which holds the final output of the secondary time constant operator right before stop during a period when the stop mode is continued for a prescribed time period, and which switches the output data to the output of the comparator/register unit after the stop state has been continued for a prescribed time.

The comparator/register unit holds the secondary time constant data at a low temperature. When it receives the output from the secondary time constant operator, it compares the output with the registered data; if the output is a datum at an even lower temperature, this datum is registered and is output at the same time.

The damping unit forms the datum with a damping characteristic slowly changing toward the datum at the lower temperature from the comparator/register unit. The data vary similarly to the variation in the secondary time constant after stopping. As the data are output to the slip frequency operator, the temperature compensation can be performed at a value near the actual secondary time constant when the operation is just started and the secondary time constant cannot be calculated.

During the operation period, with the output from the damping unit taken as the initial value, calculation of the secondary time constant is performed. The output of the calculation is used by the damping unit to successively replace the original data and the output is sent to the slip angular frequency operator. Consequently, the temperature compensation can be performed in the period from start to stop, and the torque control performance can be improved from start to stop.

An embodiment of the invention will now be described by way of example only and with reference to the drawings.

### BRIEF DESCRIPTION OF THE DRAWINGS

Fig. 1 is a block circuit diagram illustrating an application example of this invention.

Fig. 2 is a diagram illustrating the relation between the operation/stop of the motor and the data of the various parts of the temperature compensation circuit.

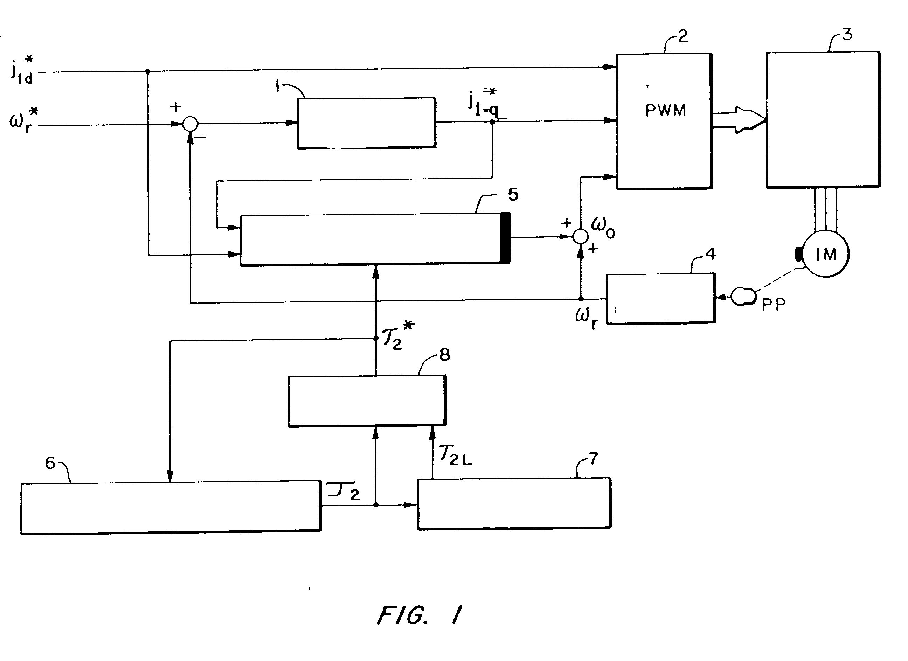

In Fig. 1, 1 represents a velocity amplifier which has the difference between rotor angular velocity command ωr* and rotor angular velocity ωr as input, and which has primary current instruction i_{1q}* of the q-axis in the orthogonal 2-axis d-q coordinate system as the output; 2 represents a PWM (pulse width modulation) circuit which controls inverter 3 with inputs of d-axis primary current instruction i_{id}*, q-axis primary current instruction i_{1q}*, and power source angular velocity ωₒ (=velocity ωr + slip angular frequency ωs); 4 represents a velocity detecting unit which can detect via pickup PP the velocity ωr of induction motor IM driven by inverter 3; and 5 represents a slip angular frequency operator which has q-axis primary current instruction i_{1q}*, rotor angular velocity instruction ωr* and secondary time constant τ₂ as the inputs and which has slip angular frequency ωs as the output (conventional technique).

6 represents a secondary time constant operator circuit which can detect the secondary time constant τ₂ of the motor from the transient characteristics with output τ₂* of damping unit 8 as the initial value; 7 represents a comparator/register unit which has an output datum τ₂ of secondary time constant operator circuit 6 as its input, and compares it with the registered low-temperature secondary time constant τ_{2L}, and sets the input datum as the new registered datum τ_{2L} if it is a lower temperature as compared with the registered low-temperature secondary time constant τ_{2L} (that is, when the time constant is even longer).

8 represents a damping unit which has τ₂ and τ_{2L} as its inputs, which sets datum τ₂* as the new datum τ₂ and outputs it to slip angular frequency operator 5 each time τ₂ varies during the inverter operation. During the stopping period of the inverter, the damping unit 8 outputs to slip angular frequency operator 5 datum τ₂* with damping characteristics slowly changing to registered datum τ_{2L} from datum τ₂ just before stop. (In the conventional scheme, there is no comparator/register unit and no damping unit, and the output of the secondary time constant circuit is sent to the slip angular frequency operator for performing the temperature compensation).

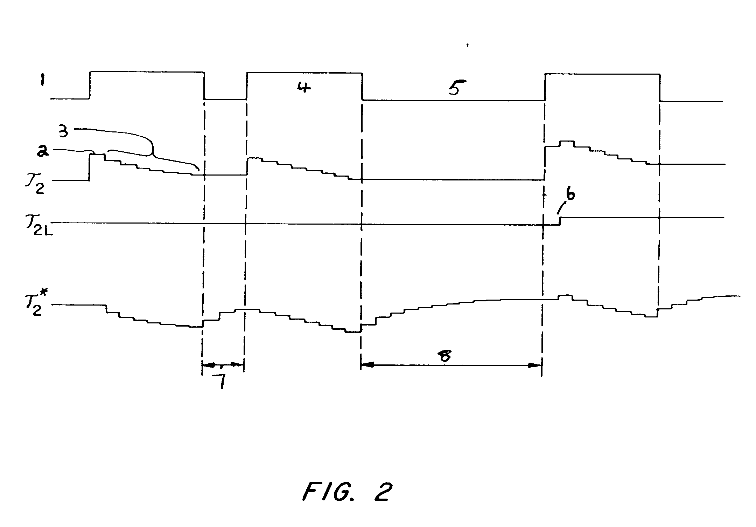

Fig. 2 shows the relation among τ₂, τ_{2L}, and τ₂*.

The top line shows the starting and stopping of the motor. At point 2 the output value τ₂ of operator 6 is set to the initial value τ₂*. During the subsequent running of the motor successive values τ₂ are calculated by the operator 6 at point 3 and supplied by the damping unit 8 to slip angular speed generator 5. When the motor stops at point 7 the damping unit 8 outputs values τ₂* slowly changing from the value τ₂ just before stop to the registered value τ_{2L}. A similar process is followed during the running phase 4. During stopped phase 8 the motor cools further and the first value of τ₂ calculated in the next running phase is a little higher (lower temperature) than the registered value τ_{2L}. It therefore replaces the value τ_{2L} in comparator/register 7 at point 6 in Figure 2.

In an alternative configuration, damping unit 8 is taken as a switch unit. In the stop mode, during the period when the stop state is continued for a prescribed time, output τ₂ just before stop is held; after the stop has continued for a prescribed time, switching is made to τ_{2L}. In this simple way, the start characteristics can be improved.

In another scheme, instead of the low-temperature datum, the data replacement condition for comparator/register unit 7 is taken as the output of the secondary time constant operator 6 of the initial operation after the stop state has continued for a prescribed time. In this way, it is possible to follow the variation in the atmospheric temperature.

In the above embodiment, the condition for replacement of the registered datum of comparator/register unit 7 is selected to ensure that the datum at the lower temperature is registered. However, since it is acceptable to hold the datum of the atmospheric temperature, it is also possible that for the comparator/register unit, even when the output of the secondary time constant operator has a temperature higher than that of the registered datum, as long as it is the initial detected datum of the initial operation after the stop state has continued for a prescribed time, it is used for replacing the registered datum. Also, instead of the comparator/register unit, it is possible to use a data register unit which can hold the initial secondary time constant operator output of the initial operation after the stop state has continued for a prescribed time.

In the aforementioned application example, damping unit 8 can form the secondary time constant datum in the start mode by damping the registered datum. However, in the case when the stop time is long, the secondary time constant in the start mode approaches the registered datum. Consequently, the damping unit may be replaced by a switch unit which can hold the last output of the secondary time constant operator right before stopping as the stop mode continues for a prescribed period of time, and which switches the output of the comparator/register unit or the data register unit to the output datum after the stop state has continued for a prescribed period of time.

With the aforementioned configuration, this invention has the following effects.
(1) Since it can store the secondary time constant at the actual low temperature, and has damping characteristics for it during the stop mode, even in the start stage when the calculation of the secondary time constant cannot be performed, the temperature compensation can still be made at a value similar to the actual secondary time constant. Consequently, the torque control characteristics can be improved in the entire period from start to stop.
(2) In the case when the data replacement condition for the comparator/register unit is set so that the initial secondary time constant datum detected after the stop state has continued for a prescribed time is used for replacement, the registered datum varies following the variation in the atmospheric temperature. Consequently, it is possible to select the secondary time constant for start corresponding to the atmospheric temperature.
(3) It is possible to perform temperature compensation without problems for practical application even when the secondary time constant measurement period is before release of the brake. Consequently, it is possible to perform the measurement of the secondary time constant during the running process, and the running control can be performed without a long start time.

## Claims

1. An electric motor secondary resistance temperature compensation circuit for an electric motor speed control device employing vector control, comprising:
(a) a secondary time constant operator that detects the secondary time constant of the electric motor;
(b) a comparator/register unit which holds and outputs the lower temperature data from a comparison of the output of the aforementioned operator and the registered data; and
(c) a damping unit which, during operation, performs successive replacement of sequential data with the output of the secondary time constant operator, and which, during shutdown, returns its output to the output value of the comparator/register unit, and outputs this data to a slip angular frequency operator of the vector control circuit.

2. A temperature compensation circuit for an induction motor's secondary resistance of a motor velocity control device by belt control, comprising:
(a) a secondary time constant operator which detects the secondary time constant of the motor;
(b) a data register unit which holds the initial output of the secondary time constant operator in the initial operation after the stop state is continued for a prescribed time; and
(c) a damping unit which performs successive replacement of data during operation with the output of the secondary time constant operator and which sends to a slip angular frequency operator of the vector control circuit a datum with a damping characteristic changing toward the output value of the data register unit when the motor is stopped.

3. A temperature compensation circuit for the secondary resistance of a motor in a motor speed control device, comprising:
(a) a secondary time constant operator which detects the secondary time constant of the motor;
(b) a comparator/register unit which compares the output of the secondary time constant operator and the registered data, and which holds the data at the low temperature; and
(c) a switch unit which holds the final output of the secondary time constant operator just before stopping, during a period when the stop mode is continued for a prescribed time period, and which switches to the output of the comparator/register unit after the stop state has been continued for a prescribed time.

4. An electric motor secondary resistance temperature compensation circuit for an electric motor speed control device employing vector control, comprising:
(a) a secondary time constant operator that detects the secondary time constant of the electric motor;
(b) a comparator/register unit which holds and outputs the lower temperature data from a comparison of the output of the aforementioned operator and the registered data, characterized by the fact that for the comparator/register unit, even when the output of the secondary time constant operator is a higher-temperature datum than the registered datum, if it is the initial detected datum in the initial operation after the stop state continues for a prescribed time, it is still taken as the datum used to replace the registered datum; and
(c) a damping unit which, during operation, performs successive replacement of sequential data with the output of the secondary time constant operator, and which, during shutdown, returns its output to the output value of the comparator/register unit, and outputs this data to a slip angular frequency operator of the vector control circuit.

5. A temperature compensation circuit for the secondary resistance of a motor in a motor speed control device, comprising:
(a) a secondary time constant operator which detects the secondary time constant of the motor;
(b) a comparator/register unit which compares the output of the secondary time constant operator and the registered data, and which holds the data at the lower temperature, characterized by the fact that for the comparator/register unit, even when the output of the secondary time constant operator is a higher-temperature datum than the registered datum, if it is the initial detected datum in the initial operation after the stop state continues for a prescribed time, it is still taken as the datum used to replace the registered datum; and
(c) a switch unit which holds the final output of the secondary time constant operator just before stopping, during a period when the stop mode is continued for a prescribed time period, and which switches the output data to the output of the comparator/register unit after the stop state has been continued for a prescribed time.

6. A temperature compensation circuit for the motor's secondary resistance of a motor in a motor velocity control device, comprising:
(a) a secondary time constant operator which detects the secondary time constant of the motor;
(b) a data register unit which holds the initial output of the secondary time constant operator in the initial operation after the stop state is continued for a prescribed time; and
(c) a switch unit which holds the final output of the secondary time constant operator just before stop during a period when the stop mode is continued for a prescribed time period, and which switches the output data to the output of the comparator/register unit after the stop state has been continued for a prescribed time.
